# EUROPEAN PATENT APPLICATION

(11) **EP 4 723 267 A1**
(43) Date of publication of application: **08.04.2026**
(21) Application number: 25184749.7
(22) Date of filing: 24.06.2025
(51) Int. Cl.: H01M 10/04, H01M 50/531, B23K 26/08

(54) **APPARATUS FOR MANUFACTURING SECONDARY BATTERY**

(30) Priority: 04.10.2024 KR 20240134554
(71) Applicant: SAMSUNG SDI CO., LTD., Yongin-si, Gyeonggi-do 17084 (KR)
(72) Inventor: JUNG, Hee Dong, Suwon-si 16678 (KR); AN, Seong Bae, Suwon-si 16678 (KR)
(74) Representative: Marks & Clerk LLP

(57) **Abstract**

An apparatus for manufacturing a secondary battery includes a cap transporter including a cap seater, which is configured to receive a cap at a cap supplying position and on which the cap is to be seated, and is rotatable about a cap turntable axis to transport the cap to a cap welding position, a can transporter configured to move a can connected to a tab toward the cap located at the cap welding position, a can holder configured to move between a can separation position spaced apart from the can and a can pressing position at which the can holder comes into contact with the can and the can is pressed in a direction in which the cap transporter is arranged, a tab pusher, and a laser generator configured to emit a laser to the tab to weld the cap and the tab.

## Description

### BACKGROUND

### 1. Field

Aspects of embodiments of the present disclosure relate to an apparatus for manufacturing a secondary battery.

### 2. Description of Related Art

Secondary batteries are batteries that can be charged and discharged, unlike primary batteries that cannot be recharged. Low-capacity secondary batteries may be used in small portable electronic devices, such as smartphones, feature phones, laptop computers, digital cameras, and camcorders, and large-capacity secondary batteries are widely used as power sources for driving motors and power storage batteries in hybrid electric vehicles, electric vehicles, and the like. The secondary battery includes an electrode assembly including positive and negative electrodes, a case for accommodating the electrode assembly, an electrode tab connected to the electrode assembly, etc.

The electrode tab is connected to a cap having a current interrupt device (CID), and the electrode tab and the cap may be bonded by laser welding. During laser welding, welding quality may vary depending on a welding distance of a laser, and since the welding distance of the laser may vary depending on a type of secondary battery, it is desirable to adjust the welding distance. Since there is a great deviation when the welding distance of the laser is adjusted manually, a device or method that can reduce the deviation is desired.

The above information disclosed in this Background section is provided for enhancement of understanding of the background of the present disclosure, and, therefore, it may contain information that does not constitute related (or prior) art.

### SUMMARY

According to an aspect of embodiments of the present disclosure, an apparatus for manufacturing a secondary battery is provided, which reduces a number of welding defects of a tab and a cap.

According to another aspect of embodiments of the present disclosure, an apparatus for manufacturing a secondary battery is provided, which reduces a defect rate of the secondary battery.

According to another aspect of embodiments of the present disclosure, an apparatus for manufacturing a secondary battery is provided, which reduces a time required for manufacturing a secondary battery.

The above and other aspects and features of the present disclosure will be described in or will be apparent from the following description of some embodiments of the present disclosure.

According to one or more embodiments of the present disclosure, an apparatus for manufacturing a secondary battery includes a cap transporter (or cap transport unit) including a cap seater (or cap seating unit), which is configured to receive a cap at a cap supplying position and on which the cap is to be seated, and is rotatable about a cap turntable axis to transport the cap to a cap welding position, a can transporter (or can transport unit) configured to move a can connected to a tab toward the cap located at (or disposed at) the cap welding position, a can holder (or can holder unit) configured to move between a can separation position spaced apart from the can and a can pressing position at which the can holder comes (or brings) into contact with the can and the can is pressed in a direction in which the cap transporter is arranged, a tab pusher (or tab pusher unit) configured to move between a tab separation position spaced apart from the tab and a tab pressing position at which the tab pusher comes (or brings) into contact with the tab and the tab is pressed toward the cap, and a laser generator (or laser generation unit) configured to emit a laser to the tab to weld the cap and the tab.

The can holder may include a can holder body configured to move between the can separation position and the can pressing position, a can concave body that includes (or is formed as) a concave groove to be in contact with an outer surface of the can, and a can connection body that connects the can holder body to the can concave body and includes a holder groove formed as a concave groove.

The can concave body of the can holder located at the can pressing position may be in contact with the can, and the can concave body of the can holder located (or disposed) at the can separation position may be spaced apart from the can.

The can holder located (or disposed) on a fixed table may include a can holder plate to which the can holder body is connected, a can holder plate protrusion protruding from the can holder plate, and a can holder plate elastic member connected to the can holder plate protrusion, and the can holder plate elastic member may be connected to a fixed table protrusion protruding from the fixed table to generate a tensile force to move the can holder to the can pressing position.

The can holder may include a can holder driver (or can holder driving unit) on the fixed table to move the can holder plate to the can separation position.

The tab pusher may include a tab pusher holder body configured to move between the tab separation position and the tab pressing position, and a tab pusher main body that is connected to the tab pusher holder body, spaced apart from the tab at the tab separation position, and configured to press the tab toward the cap at the tab pressing position.

The tab pusher may include a tab pusher main body hole that is (or is provided as) a hole passing through the tab pusher main body, and the laser may be configured to be emitted onto the tab through the tab pusher main body hole of the tab pusher located (or disposed) at the tab pressing position.

The tab pusher main body may be rotatable with respect to the tab pusher holder body and movable between a tab welding position at which the laser passes through the tab pusher main body hole and a focus adjusting position spaced apart from the tab welding position.

The tab pusher may include a tab pusher holder protrusion protruding from the tab pusher holder body, and a tab pusher main concave groove formed as a concave groove in the tab pusher main body, and, based on the tab pusher main body located (or disposed) at the tab welding position, the tab pusher main concave groove may be seated on the tab pusher holder protrusion.

The tab pusher may further include a tab pusher holder latch (disposed) on the tab pusher holder body, and, based on the tab pusher main body located (or disposed) at the tab welding position, the tab pusher holder latch may be in contact with the tab pusher main body to restrict movement of the tab pusher main body.

The tab pusher may include a tab pusher driver (or tab pusher driving unit) (located or disposed) on a fixed table and configured to move the tab pusher holder body between the tab separation position and the tab pressing position.

The cap transporter may include a cap turntable on which the cap seating unit (or cap seater) is arranged (or located, or disposed) and which is rotatable about a cap turntable axis and vertically movable between a cap ascending position and a cap descending position.

The cap transporter may include a table hole that passes through the cap turntable and is formed as a long hole, and a focus fixing member that is insertable in the cap seating unit through the table hole and fixes the cap seater that moves with respect to the cap turntable.

The cap turntable may receive the cap at the cap descending position, ascend from the cap descending position to the cap ascending position and rotate, and descend from the cap ascending position to the cap descending position to weld the cap and the tab by the laser.

The cap seater may include plurality of cap seaters (or cap seating units) on an outer side of the cap turntable, and the plurality of cap seaters may be arranged (or disposed) at regular intervals.

The cap seater may be detachably attached to the cap transporter.

The cap seater may include a seating mounter (or seating mounting unit) on the cap transporter, a seating mover (or seating movement unit) which on the seating mounter and of which a distance from the cap turntable axis is adjustable, and a focus length replacement body (disposed to be) detachably attached to the seating mover.

The cap may be attached to the focus length replacement body at the cap supplying position, and the cap may be detached from the focus length replacement body at the cap welding position.

The seating mounter may include a seating mounting rail that extends in a radial direction of the cap turntable axis, and the seating mover may include a seating movement rail (or seating movement rail unit) (which is disposed) on the seating mounting rail and of which a distance from the cap turntable axis is adjustable, and a seating replacement rail which is fixed to the seating movement rail unit and on which the focus length replacement body is located (or disposed).

The cap seater may include a replacement body groove which is formed as a concave groove in the focus length replacement body and in which the cap is to be arranged (or is disposed), and a replacement body vacuum connector (or vacuum connection unit) protruding from the focus length replacement body.

At least some of the above and other features of the invention are set out in the claims.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings, in which:
FIG. 1 is a perspective view illustrating an apparatus for manufacturing a secondary battery according to an embodiment of the present disclosure from a first point of view;
FIG. 2 is a perspective view illustrating an apparatus for manufacturing a secondary battery according to an embodiment of the present disclosure from a second point of view;
FIG. 3 is a perspective view illustrating a tab pusher main body of the apparatus for manufacturing a secondary battery, which moves to a tab welding position, according to an embodiment of the present disclosure from the second point of view;
FIG. 4 is a perspective view illustrating a cap transport unit of the apparatus for manufacturing a secondary battery, which rotates, according to an embodiment of the present disclosure;
FIG. 5 is a perspective view illustrating a cap transport unit of the apparatus for manufacturing a secondary battery, which descends, according to an embodiment of the present disclosure;
FIG. 6 is a perspective view illustrating the tab pusher main body of the apparatus for manufacturing a secondary battery, which moves to the tab welding position, according to an embodiment of the present disclosure;
FIG. 7 is a perspective view illustrating a can holder unit of the apparatus for manufacturing a secondary battery, which moves to a cap pressing position, according to an embodiment of the present disclosure;
FIG. 8 is a perspective view illustrating a tab pusher unit of the apparatus for manufacturing a secondary battery, which moves to a tab pressing position, according to an embodiment of the present disclosure;
FIG. 9 is a perspective view illustrating the tab pusher unit of the apparatus for manufacturing a secondary battery, which moves to a tab separation position, according to an embodiment of the present disclosure;
FIG. 10 is a perspective view illustrating the can holder unit of the apparatus for manufacturing a secondary battery, which moves to a can separation position, according to an embodiment of the present disclosure;
FIG. 11 is a perspective view illustrating a can welded to a cap moved by a can transport unit of the apparatus for manufacturing a secondary battery according to an embodiment of the present disclosure;
FIG. 12 is a perspective view illustrating a focus correction unit of the apparatus for manufacturing a secondary battery according to an embodiment of the present disclosure;
FIG. 13 is a plan view illustrating the focus correction unit of the apparatus for manufacturing a secondary battery according to an embodiment of the present disclosure;
FIG. 14 is a side view illustrating the focus correction unit of the apparatus for manufacturing a secondary battery according to an embodiment of the present disclosure;
FIG. 15 is an exploded perspective view illustrating a cap seating unit of the apparatus for manufacturing a secondary battery according to an embodiment of the present disclosure;
FIG. 16 is a perspective view illustrating the cap seating unit of the apparatus for manufacturing a secondary battery according to an embodiment of the present disclosure;
FIG. 17 is a plan view illustrating the cap seating unit of the apparatus for manufacturing a secondary battery according to an embodiment of the present disclosure;
FIG. 18 is a side view illustrating the cap seating unit of the apparatus for manufacturing a secondary battery according to an embodiment of the present disclosure;
FIG. 19 is a perspective view illustrating a first focal length replacement body according to an embodiment of the present disclosure;
FIG. 20 is a perspective view illustrating a second focal length replacement body according to an embodiment of the present disclosure; and
FIG. 21 is a perspective view illustrating a focal length replacement body being replaced on the cap seating unit of the apparatus for manufacturing a secondary battery according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

An X-axis, Y-axis, and Z-axis illustrated in the drawings are defined as axes that are perpendicular to each other. The X-axis, Y-axis, and Z-axis may be auxiliarily used to describe a moving direction, a rotating direction, etc., of a component.

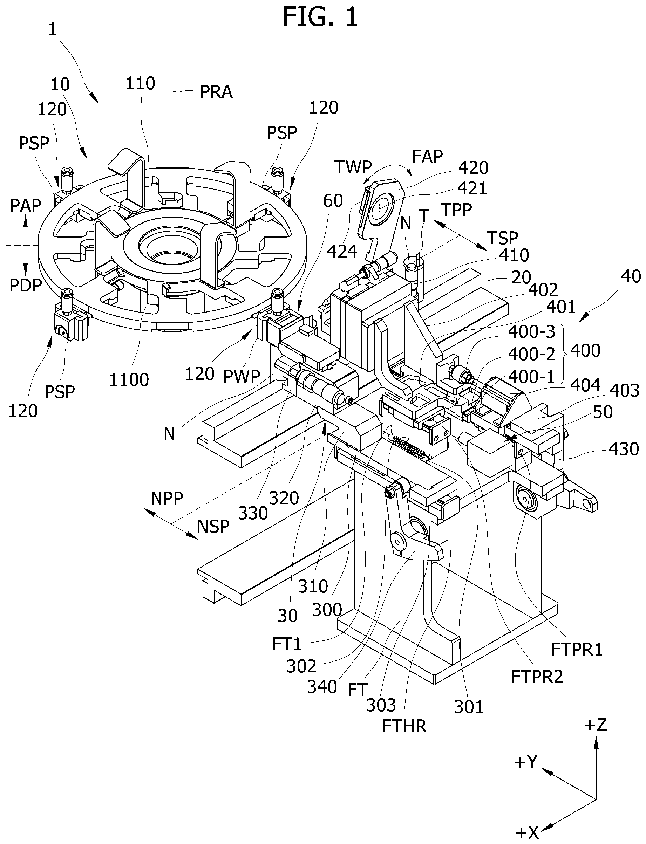

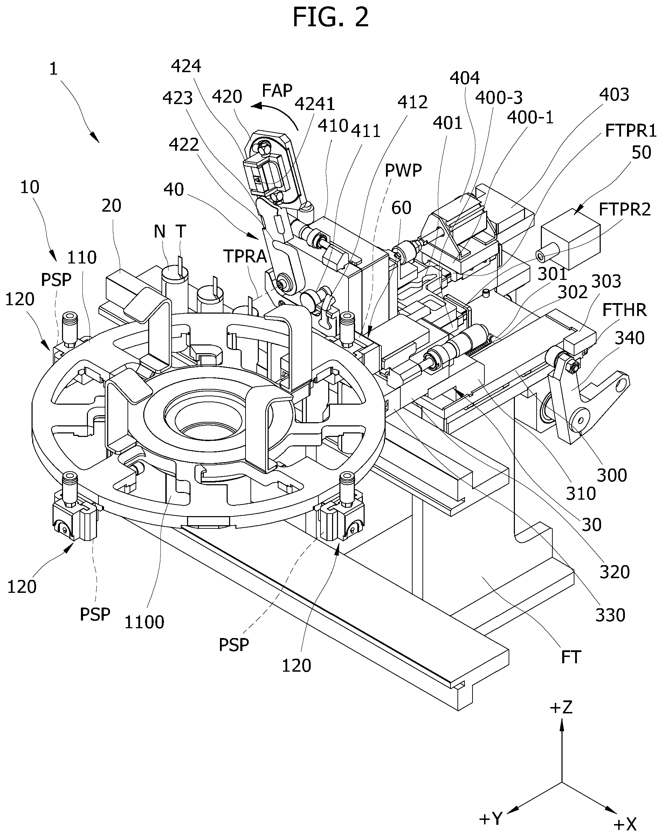

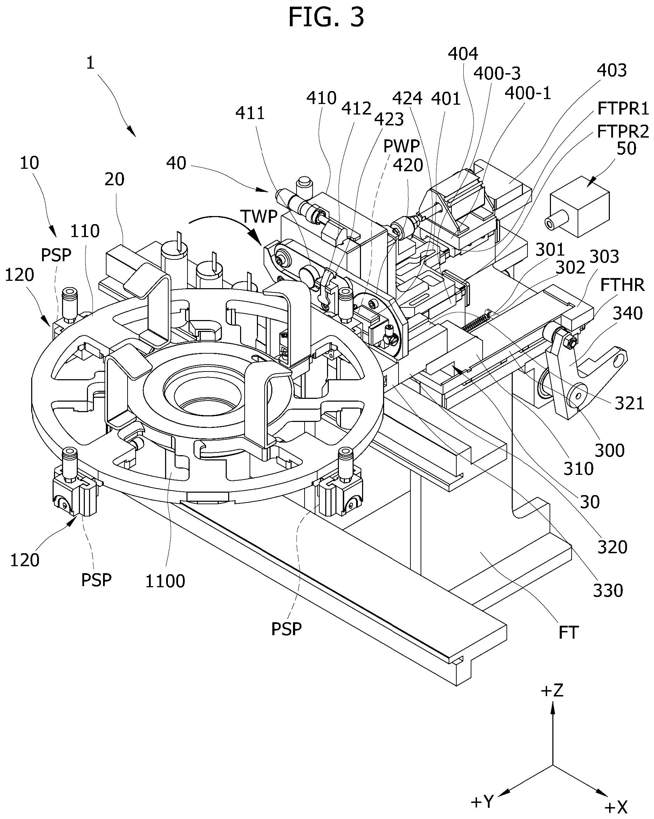

FIG. 1 is a perspective view illustrating an apparatus for manufacturing a secondary battery according to an embodiment of the present disclosure from a first point of view; FIG. 2 is a perspective view illustrating an apparatus for manufacturing a secondary battery according to an embodiment of the present disclosure from a second point of view; and FIG. 3 is a perspective view illustrating a tab pusher main body of the apparatus for manufacturing a secondary battery, which moves to a tab welding position, according to an embodiment of the present disclosure from the second point of view.

Referring to FIGS. 1 to 3, a manufacturing apparatus 1 for a secondary battery is described herein.

The manufacturing apparatus 1 for a secondary battery may transport a cap P and connect a tab T connected to a can N to the cap P. According to an embodiment, the manufacturing apparatus 1 for a secondary battery may bond the cap P and the tab T by welding.

The cap P may be connected to the can N through the tab T. The cap P may be connected to the can N through the tab T or connected to an electrode assembly disposed inside the can N. The cap P may be used as an electrode terminal (e.g., a positive electrode terminal or a negative electrode terminal) and may function as a current interrupt device (CID) for interrupting a current if an event (e.g., thermal runaway) occurs in the secondary battery.

The manufacturing apparatus 1 for a secondary battery may include a cap transport unit, or cap transporter, 10, a can transport unit, or can transporter, 20, a can holder unit, or can holder, 30, a tab pusher unit, or tab pusher, 40, and a laser generation unit, or laser generator, 50. The manufacturing apparatus 1 for a secondary battery may further include a focus correction unit, or focus corrector, 60.

The cap transport unit 10 may transport the cap P. In an embodiment, the cap transport unit 10 may rotate to transport the cap P.

According to an embodiment, the cap transport unit 10 may rotate about a cap turntable axis PRA parallel to an axis (e.g., a Z-axis). The cap transport unit 10 may receive the cap P at a cap supplying position PSP and align the cap P with the can N at a cap welding position PWP. The cap welding position PWP may be disposed between the cap transport unit 10 and the can holder unit 30.

The cap transport unit 10 may move along the cap turntable axis PRA. According to an embodiment, the cap transport unit 10 may ascend (e.g., in a +Z-axis direction) and descend (e.g., in a -Z-axis direction) along the cap turntable axis PRA. The cap transport unit 10 may move between a cap ascending position PAP and a cap descending position PDP. According to an embodiment, the cap transport unit 10 may receive the cap P at the cap descending position PDP and the cap supplying position PSP. The cap transport unit 10 may ascend from the cap descending position PDP and move to the cap ascending position PAP. The cap transport unit 10 may rotate at the cap ascending position PAP.

The cap transport unit 10 disposed at the cap descending position PDP and the cap supplying position PSP may receive the cap P and ascend to the cap ascending position PAP. The cap transport unit 10 disposed at the cap ascending position PAP may rotate to transport the cap P to the cap welding position PWP. The cap transport unit 10 disposed at the cap welding position PWP may descend to the cap descending position PDP. Therefore, the cap P may be aligned with the can N.

A plurality of cans N may be disposed on the can transport unit 20, and the can transport unit 20 may move the cans N in a direction (e.g., a +X-axis direction). The tab T may be disposed to be connected to the can N, and the can N to which the tab T is connected may be moved by the can transport unit 20 to a position at which the cap P is disposed.

The can holder unit 30 may be in contact with the can N disposed on the can transport unit 20. The can holder unit 30 may move parallel to a direction (e.g., a Y-axis direction). According to an embodiment, the can holder unit 30 may move in a direction (e.g., a +Y-axis direction) to press the can N. As the can holder unit 30 presses the can N, a position of the can N may be fixed.

The can holder unit 30 may move in a direction (e.g., the +Y-axis direction) from a can separation position NSP that is spaced apart from the can N to a can pressing position NPP in contact with the can N. The can holder unit 30 may move in another direction (e.g., a -Y-axis direction) from the can pressing position NPP in contact with the can N to move to the can separation position NSP spaced apart from the can N. Therefore, the can holder unit 30 may be in contact with the can N to fix the can N and may be spaced apart from the can N to release the fixation of the can N.

The tab pusher unit 40 may rotate about an axis (e.g., an axis parallel to the X-axis). In an embodiment, the tab pusher unit 40 may rotate about a single axis to move between a tab welding position TWP disposed adjacent to the tab T and a focus adjusting position FAP spaced apart from the tab T.

The tab pusher unit 40 may be in contact with the tab T connected to the can N. The tab pusher unit 40 may move parallel to a direction (e.g., the Y-axis direction). In an embodiment, the can holder unit 30 and the tab pusher unit 40 may move independently. According to an embodiment, the tab pusher unit 40 may move in a direction (e.g., the +Y-axis direction) to press the tab T connected to the can N. As the tab pusher unit 40 presses the tab T, the position of the tab T may be fixed.

The tab pusher unit 40 may move in one direction (e.g., the +Y-axis direction) from the tab separation position TSP spaced apart from the tab T to move the tab pressing position TPP in contact with the tab T. The tab pusher unit 40 may move in another direction (e.g., the -Y-axis direction) from the tab pressing position TPP in contact with the tab T to the tab separation position TSP spaced apart from the tab T. Therefore, the tab pusher unit 40 may be in contact with the tab T to fix the tab T and may be spaced apart from the tab T to release the fixation of the tab T.

The tab pusher unit 40 may move between the tab welding position TWP and the tab pressing position TPP to be in contact with the tab T and spaced apart from the tab T. The tab pusher unit 40 at the focus adjusting position FAP may not be in contact with the tab T even when moving between the tab pressing position TPP and the tab separation position TSP.

The laser generation unit 50 may generate a laser L. The laser L generated by the laser generation unit 50 may be emitted onto the tab T in contact with the cap P. The laser L may be emitted onto the tab T such that the cap P is welded to the tab T.

In a process of welding the cap P and the tab T by the laser L, the cap transport unit 10 may be disposed at the cap welding position PWP and the cap descending position PDP, the can transport unit 20 may not transport the can N, the can holder unit 30 may be disposed at the can pressing position NPP that is in contact with the can N and presses the can N, and the tab pusher unit 40 may be disposed at the tab welding position TWP and the tab pressing position TPP that are in contact with the tab T.

Therefore, the tab T and the cap P may be welded by the laser L while the can N, the tab T, and the cap P are fixed.

When the tab T and the cap P are welded by the laser L, the tab pusher unit 40 may move in a direction (e.g., the -Y-axis direction) to move from the tab pressing position TPP to the tab separation position TSP. Therefore, the tab pusher unit 40 may be spaced apart from the tab T. In addition, the can holder unit 30 may move in a direction (e.g., the -Y-axis direction) to move from the can pressing position NPP to the can separation position NSP. Therefore, the can holder unit 30 may be spaced apart from the can N. The cap transport unit 10 may move in a direction (e.g., a +Z-axis direction) to move from the cap descending position PDP to the cap ascending position PAP. Therefore, the cap transport unit 10 may be spaced apart from the cap P connected to the tab T.

The focus correction unit 60 may be disposed on the can holder unit 30 to adjust a distance between the laser generation unit 50 and the tab T. Welding quality may vary depending on a relationship between the distance between the laser generation unit 50 and the tab T and a focal length of the laser L. For example, if the distance between the laser generation unit 50 and the tab T is out of the focal length, welding quality may not be good, which may cause defects in the secondary battery being manufactured.

The focus correction unit 60 may finely adjust the distance between the laser generation unit 50 and the tab T, and the distance between the laser generation unit 50 and the tab T may be disposed within the focal length of the laser L.

Herein, a configuration of the manufacturing apparatus 1 for a secondary battery will be described.

The cap transport unit 10 may include a cap turntable 110 and a cap seating unit, or cap seater, 120.

The cap turntable 110 may be supported by a cap turntable support 1100 and may rotate about the cap turntable axis PRA. In an embodiment, a shape of the cap turntable 110 may be generally a disc shape.

The cap turntable 110 may move parallel to a direction (e.g., the Z-axis direction). According to an embodiment, the cap turntable 110 may vertically move between the cap ascending position PAP and the cap descending position PDP in a direction of the cap turntable axis PRA. The cap turntable 110 may ascend and may be disposed at the cap ascending position PAP and may descend and may be disposed at the cap descending position PDP.

As the cap turntable 110 vertically moves between the cap ascending position PAP and the cap descending position PDP, the cap P may be supplied to the cap seating unit 120 and detached from the cap seating unit 120 and joined to the can N. According to an embodiment, the cap turntable 110 may receive the cap P at the cap descending position PDP and bring the cap P into contact with the tab T. The cap turntable 110 may rotate at the cap ascending position PAP.

The cap seating unit 120 may be disposed on the cap turntable 110. The cap seating unit 120 may be disposed on the cap turntable 110, and the cap P may be disposed on the cap seating unit 120.

In an embodiment, a material of the cap turntable 110 may include a metal. According to an embodiment, the material of the cap turntable 110 may include aluminum, copper, magnesium, etc. In an embodiment, the material of the cap turntable 110 may include duralumin.

The cap seating unit 120 may be disposed on an outer side of the cap turntable 110. According to an embodiment, the cap seating unit 120 may be disposed on an outer surface of the cap turntable 110 in a radial direction. The cap seating unit 120 may be provided as a plurality of cap seating units. In an embodiment, the cap seating units 120 may be disposed at regular intervals centered on the cap turntable axis PRA of the cap turntable 110. In an embodiment, four cap seating units 120 may be provided on the cap turntable 110. However, the arrangement of the four cap seating units 120 on the cap turntable 110 is only one of various embodiments, and the present disclosure is not limited thereto.

The cap seating unit 120 may be disposed at the cap supplying position PSP and the cap welding position PWP according to the rotation of the cap turntable 110.

The cap welding position PWP may be defined as a position at which the cap P disposed on the cap seating unit 120 is aligned with the can N. According to an embodiment, the cap seating unit 120 disposed in the -Y-axis direction of the cap turntable 110 may be disposed at the cap welding position PWP.

The cap supplying position PSP may be defined as a position at which the cap P is supplied and disposed at the cap seating unit 120. The cap supplying position PSP may be diverse. According to an embodiment, the cap supplying position PSP may be in the +X-axis direction, +Y-axis direction, and/or -X-axis direction of the cap turntable 110.

When the cap turntable 110 is disposed at the cap descending position PDP and the cap seating unit 120 is disposed at the cap supplying position PSP, the cap P may be supplied to the cap seating unit 120. After the cap P is supplied to the cap seating unit 120 and seated on the cap seating unit 120, the cap turntable 110 may ascend to the cap ascending position PAP. The cap turntable 110 disposed at the cap ascending position PAP may rotate about the cap turntable axis PRA. The cap turntable 110 may stop after rotating at a certain angle (e.g., a set angle). According to an embodiment, the set angle may be 90 degrees. However, the angle at which the cap turntable 110 rotates is not limited to 90 degrees and may be greater than 0 degrees and less than 180 degrees.

When the cap turntable 110 stops after rotating at the set angle, the cap seating unit 120 may be disposed at the cap welding position PWP. While the cap seating unit 120 is disposed at the cap welding position PWP, the cap turntable 110 may descend to the cap descending position PDP. When the cap seating unit 120 on which the cap P is seated is disposed at the cap welding position PWP, the cap P may be welded to the tab T connected to the can N. After the cap P and the tab T are welded, the cap turntable 110 may ascend to the cap ascending position PAP. As the cap turntable 110 ascends to the cap ascending position PAP, the cap seating unit 120 may also ascend. As the cap seating unit 120 ascends, the cap P welded to the tab T and disposed at the cap seating unit 120 may be spaced apart from the cap seating unit 120.

The can transport unit 20 may extend parallel to a direction (e.g., the X-axis direction) and transport the can N. According to an embodiment, the can transport unit 20 may move the can N connected to the tab T in a direction (e.g., the +X-axis direction). The can transport unit 20 may repeat an operation of stopping after moving the can N to a certain distance (e.g., a set distance) and stopping after again moving the can N to the set distance. While the can transport unit 20 stops transporting the can N, at least one of the plurality of cans N disposed on the can transport unit 20 may be welded to the tab T and the cap P that are attached to the can N.

The can N aligned with the cap seating unit 120 disposed at the cap welding position PWP may be welded to the cap P. The cap welding position PWP may be disposed between the cap turntable 110 and the can holder unit 30.

According to an embodiment, the tab T attached to the can N aligned with the cap seating unit 120 disposed at the cap welding position PWP may be welded to the cap P.

While the can transport unit 20 is stopped, the cap P and the tab T may be welded, and the can N welded to the cap P and the tab T may be moved in a direction (e.g., the +X-axis direction) by the can transport unit 20. In this way, the can transport unit 20 may repeat stopping after moving the can N to the set distance in a direction (e.g., the +X-axis direction).

The can holder unit 30 may be disposed on a fixed table FT. According to an embodiment, the can holder unit 30 may be disposed on the fixed table FT (e.g., in the +Z-axis direction). The can holder unit 30 may move parallel to a direction (e.g., the Y-axis direction) with respect to the fixed table FT.

The can holder unit 30 may move in the -Y-axis direction with respect to the fixed table FT to move to the can separation position NSP and may be spaced apart from the can N. The can holder unit 30 may move in the +Y-axis direction with respect to the fixed table FT to move to the can pressing position NPP and may be in contact with the can N. The can holder unit 30 may move to the can pressing position NPP to be in contact with the can N and press the can N in a direction (e.g., the +Y-axis direction). As the can holder unit 30 presses the can N, the can N may be fixed by the can holder unit 30.

The can holder unit 30 may include a can holder plate 300, a can holder body 310, a can connection body 320, a can concave body 330, and a can holder driving unit, or can holder driver, 340.

The can holder plate 300 may move with respect to the fixed table FT. The can holder plate 300 may be provided in a generally plate shape.

The can holder unit 30 may include a can holder plate protrusion 301 formed to protrude from the can holder plate 300.

The can holder plate protrusion 301 may be connected to a can holder plate elastic member 302. The can holder plate elastic member 302 may be provided as an elastic body to generate an elastic force depending on deformation. According to an embodiment, the can holder plate elastic member 302 may generate a tensile force.

An end of the can holder plate elastic member 302 may be connected to the can holder plate protrusion 301, and another end of the can holder plate elastic member 302 may be connected to a fixed table protrusion FT1 formed to protrude from the fixed table FT. The fixed table protrusion FT1 may be disposed between the can holder plate protrusion 301 and the cap transport unit 10.

As the can holder plate 300 moves in a direction (e.g., the -Y-axis direction) away from the cap transport unit 10, a tensile force may be generated in the can holder plate elastic member 302. According to an embodiment, the tensile force may be generated in the can holder plate elastic member 302 based on the can holder plate 300 disposed at the can separation position NSP. Therefore, the can holder plate 300 may be moved in a direction (e.g., +Y-axis direction) toward the cap transport unit 10 by the tensile force of the can holder plate elastic member 302. The can holder plate 300 may move toward the cap transport unit 10 to move to the can pressing position NPP. The can holder plate elastic member 302 may generate a tensile force to move the can holder unit 30 to the can pressing position NPP.

A can holder plate contact unit 303 may be disposed on the can holder plate 300. The can holder plate contact unit 303 may protrude from the can holder plate 300 to be in contact with the can holder driving unit 340. The can holder driving unit 340 may be in contact with the can holder plate contact unit 303 to move the can holder plate 300 to the can separation position NSP. In an embodiment, the can holder driving unit 340 may receive a driving force from a motor (not illustrated) to move the can holder plate 300.

While the can holder driving unit 340 does not operate, the can holder unit 30 may be disposed at the can pressing position NPP by the can holder plate elastic member 302, and, while the can holder driving unit 340 operates, the can holder unit 30 may be moved to the can separation position NSP by the can holder driving unit 340.

The can holder body 310 may be disposed on the can holder plate 300. According to an embodiment, the can holder body 310 may be disposed on the can holder plate 300 (e.g., in the +Z-axis direction). The can holder body 310 may protrude from the can holder plate 300 to the cap transport unit 10.

The can connection body 320 may be connected to the can holder body 310. According to an embodiment, the can connection body 320 may be disposed on the can holder body 310 (e.g., in the +Z-axis direction). The can connection body 320 may protrude from the can holder plate 300 to the cap transport unit 10.

A holder groove 321 may be disposed in the can connection body 320. The focus correction unit 60 may be disposed on the can connection body 320 (e.g., in the +Z-axis direction). According to an embodiment, the focus correction unit 60 may be mounted in the holder groove 321 and may be used to adjust the position of the cap seating unit 120 by being connected to the cap seating unit 120.

The can concave body 330 may be connected to the can connection body 320. According to an embodiment, the can concave body 330 may be disposed at a side (e.g., in the +Y-axis direction) of the can connection body 320 and disposed between the can connection body 320 and the cap transport unit 10.

A concave groove may be formed in the can concave body 330. The concave groove formed in the can concave body 330 may be in contact with the can N. According to an embodiment, when the can holder unit 30 is disposed at the can pressing position NPP, the groove formed in the can concave body 330 and the can N may be in contact with each other to press the can N. When the can holder unit 30 is disposed at the can separation position NSP, the can concave body 330 may be spaced apart from the can N.

When the can transport unit 20 stops and the transport of the can N is stopped, the can holder unit 30 may move to the can pressing position NPP to press the can N. When the can holder unit 30 moves to the can separation position NSP such that the can concave body 330 is spaced apart from the can N, the can transport unit 20 may transport the can N.

A fixed table holder rail unit, or fixed table holder rail, FTHR may be disposed on the fixed table FT. According to an embodiment, the fixed table holder rail unit FTHR may be disposed on the fixed table FT (e.g., in the +Z-axis direction).

The fixed table holder rail unit FTHR may be disposed to extend parallel to a direction (e.g., the Y-axis direction). The can holder plate 300 may be disposed on the fixed table holder rail unit FTHR and may move in a longitudinal direction of the fixed table holder rail unit FTHR. Therefore, a moving direction of the can holder plate 300 may be limited. For example, the moving direction of the can holder plate 300 may be parallel to the Y-axis direction.

The tab pusher unit 40 may include a tab pusher moving plate unit, or tab pusher moving plate, 400, a tab pusher holder body 410, a tab pusher main body 420, and a tab pusher driving unit, or tab pusher driver, 430.

The tab pusher moving plate unit 400 may move with respect to the fixed table FT. According to an embodiment, the tab pusher moving plate unit 400 may move parallel to a direction (e.g., the Y-axis direction) with respect to the fixed table FT. The tab pusher moving plate unit 400 may move in the +Y-axis direction to move to the tab pressing position TPP, and the tab pusher moving plate unit 400 may move in the -Y-axis direction to move to the tab separation position TSP.

A first fixed table pusher rail unit, or first fixed table pusher rail, FTPR1 and a second fixed table pusher rail unit, or second fixed table pusher rail, FTPR2 may be disposed on the fixed table FT. The first fixed table pusher rail unit FTPR1 and the second fixed table pusher rail unit FTPR2 may be disposed to extend in a direction (e.g., the Y-axis direction).

The second fixed table pusher rail unit FTPR2 may be disposed between the first fixed table pusher rail unit FTPR1 and the fixed table holder rail unit FTHR.

In an embodiment, the tab pusher moving plate unit 400 includes a first tab pusher moving plate 400-1, a second tab pusher moving plate 400-2, and a third tab pusher moving plate 400-3.

The first tab pusher moving plate 400-1 and the second tab pusher moving plate 400-2 may be disposed to be spaced apart from each other and disposed on the first fixed table pusher rail unit FTPR1 and move in a longitudinal direction of the first fixed table pusher rail unit FTPR1.

The third tab pusher moving plate 400-3 may be disposed on the second fixed table pusher rail unit FTPR2 to move in a longitudinal direction of the second fixed table pusher rail unit FTPR2.

The second tab pusher moving plate 400-2 may be disposed between the first tab pusher moving plate 400-1 and the tab pusher holder body 410.

The first tab pusher moving plate 400-1 and the second tab pusher moving plate 400-2 may be connected by a tab pusher buffer unit, or tab pusher buffer, 404. The tab pusher buffer unit 404 may mitigate an impact between the first tab pusher moving plate 400-1 and the second tab pusher moving plate 400-2 and adjust a distance therebetween when the tab pusher moving plate unit 400 moves.

A tab pusher guide 403 may be disposed on the first tab pusher moving plate 400-1. The tab pusher guide 403 may be connected to the tab pusher driving unit 430 and moved by driving the tab pusher driving unit 430. As the tab pusher guide 403 moves, the first tab pusher moving plate 400-1 may also move.

The second tab pusher moving plate 400-2 and the third tab pusher moving plate 400-3 may be connected by a tab pusher connecting plate 401. Therefore, the second tab pusher moving plate 400-2 and the third tab pusher moving plate 400-3 may move in conjunction with each other.

In an embodiment, a tab pusher support 402 may be disposed on the tab pusher connecting plate 401. The tab pusher support 402 may connect the tab pusher connecting plate 401 to the tab pusher holder body 410.

In this way, the tab pusher moving plate unit 400 may be moved by driving the tab pusher driving unit 430, and the tab pusher holder body 410 may be moved by moving the tab pusher moving plate unit 400. The tab pusher holder body 410 may move between the tab pressing position TPP and the tab separation position TSP.

The tab pusher holder body 410 may be connected to the tab pusher support 402 to move parallel to a direction (e.g., the Y-axis direction).

In an embodiment, a tab pusher holder protrusion 411 and a tab pusher holder latch 412 may be disposed on the tab pusher holder body 410.

The tab pusher holder protrusion 411 may be in contact with a tab pusher main concave groove 422 of the tab pusher main body 420.

The tab pusher holder latch 412 may be in contact with a tab pusher main engagement groove 423 of the tab pusher main body 420 to restrict the rotation of the tab pusher main body 420.

The tab pusher main body 420 may rotate with respect to the tab pusher holder body 410. According to an embodiment, the tab pusher main body 420 may rotate about a tab pusher main body rotational axis TPRA.

The tab pusher unit 40 may include a tab pusher main body hole 421 provided as a hole that passes through the tab pusher main body 420. The tab pusher main body hole 421 may pass through the tab pusher main body 420 in a direction (e.g., the Y-axis direction). The laser L may be emitted onto the tab T through the tab pusher main body hole 421.

The tab pusher main body 420 may rotate and move between the tab welding position TWP and the focus adjusting position FAP.

The tab pusher main body 420 disposed at the tab welding position TWP may be in contact with the tab pusher holder protrusion 411, and the laser L may be emitted onto the tab T through the tab pusher main body hole 421.

The tab pusher main body 420 disposed at the focus adjusting position FAP may be spaced apart from the tab pusher holder protrusion 411, and the laser L may not pass through the tab pusher main body hole 421.

The tab pusher main concave groove 422 formed as a concave groove may be provided in the tab pusher main body 420. The tab pusher main concave groove 422 of the tab pusher main body 420 disposed at the tab welding position TWP may be in contact with the tab pusher holder protrusion 411 and may restrict the rotation of the tab pusher main body 420.

The tab pusher main engagement groove 423 formed as a concave and inclined groove may be provided in the tab pusher main body 420. The tab pusher main engagement groove 423 of the tab pusher main body 420 disposed at the tab welding position TWP may be in contact with the tab pusher holder latch 412. As the tab pusher main engagement groove 423 is in contact with the tab pusher holder latch 412, the rotation of the tab pusher main body 420 disposed at the tab welding position TWP may be restricted.

The movement of the tab pusher main body 420 disposed at the tab welding position TWP may be restricted by the tab pusher holder protrusion 411 and the tab pusher holder latch 412.

In an embodiment, a tab pusher contact body 424 may be disposed on the tab pusher main body 420. The tab pusher contact body 424 may be disposed at a side (e.g., in the +Y-axis direction) of the tab pusher main body 420.

The tab pusher contact body 424 may be in contact with the tab T. According to an embodiment, when the tab pusher unit 40 is disposed at the tab welding position TWP and the tab pressing position TPP, the tab pusher contact body 424 may be in contact with the tab T. The tab pusher contact body 424 disposed at the tab welding position TWP and the tab pressing position TPP may be in contact with the tab T to press the tab T in a direction (e.g., the +Y-axis direction). Therefore, a contact area between the tab T and the cap P can become wide.

In an embodiment, the tab pusher contact body 424 may include a magnet. In an embodiment, the tab pusher contact body 424 includes a magnet, and the tab pusher contact body 424 disposed at the tab welding position TWP and the tab pressing position TPP may generate an attractive force with the tab T and/or the cap P to bring the tab T into close contact with the cap P.

The tab pusher unit 40 may include a tab pusher contact body hole 4241 that passes through the tab pusher contact body 424. The laser L may be emitted onto the tab T through the tab pusher contact body hole 4241 disposed at the tab welding position TWP and the tab pressing position TPP.

When the laser L is generated, the tab pusher unit 40 may be disposed at the tab welding position TWP and the tab pressing position TPP, and, after the generation of the laser L is ended, the tab pusher unit 40 may be disposed at the tab welding position TWP and the tab separation position TSP. Therefore, the tab pusher unit 40 may be spaced apart from the tab T.

The laser generation unit 50 may generate the laser L. The laser L generated by the laser generation unit 50 may be emitted onto the tab T that overlaps the cap P. The laser L may be emitted onto the tab T such that the cap P is welded to the tab T.

The focus correction unit 60 may be disposed in the holder groove 321 of the can connection body 320 and may be in contact with the cap seating unit 120. The focus correction unit 60 may be used to adjust the position of the cap seating unit 120 by being in contact with the cap seating unit 120. In this way, as the position of the cap seating unit 120 is adjusted through the focus correction unit 60, a distance between the laser generation unit 50 and the cap seating unit 120 may be disposed within the focal length of the laser L.

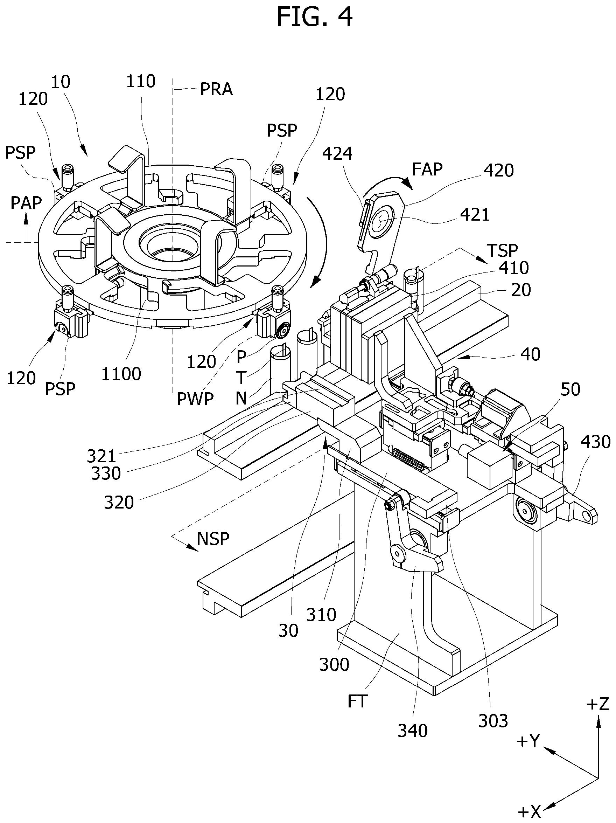

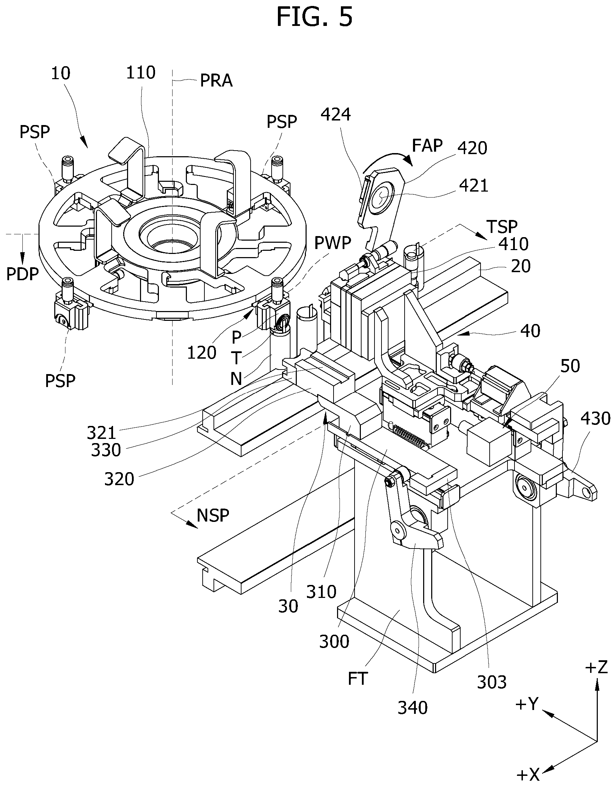

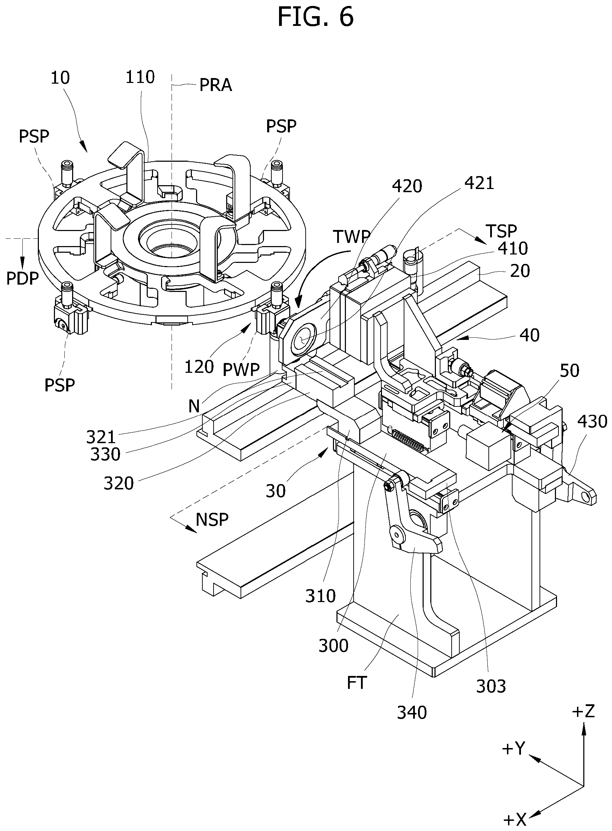

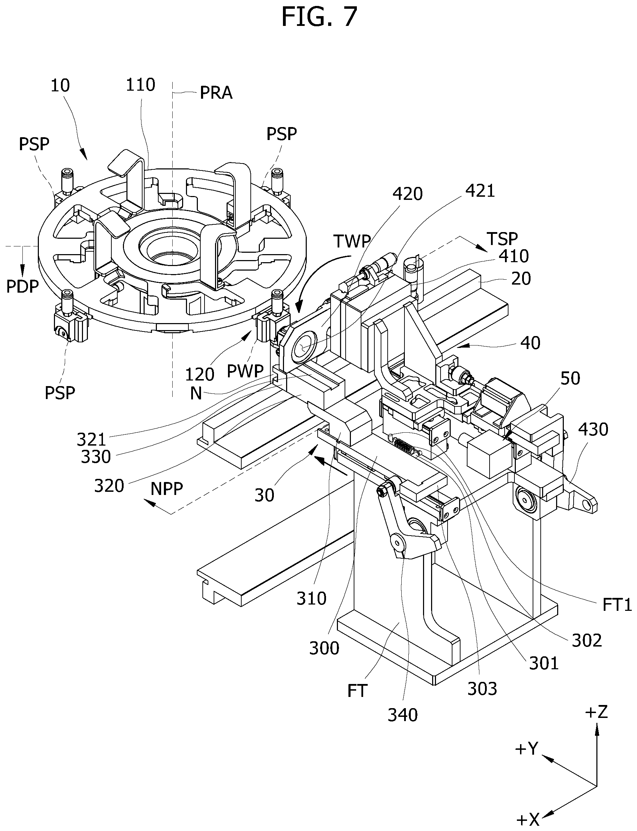

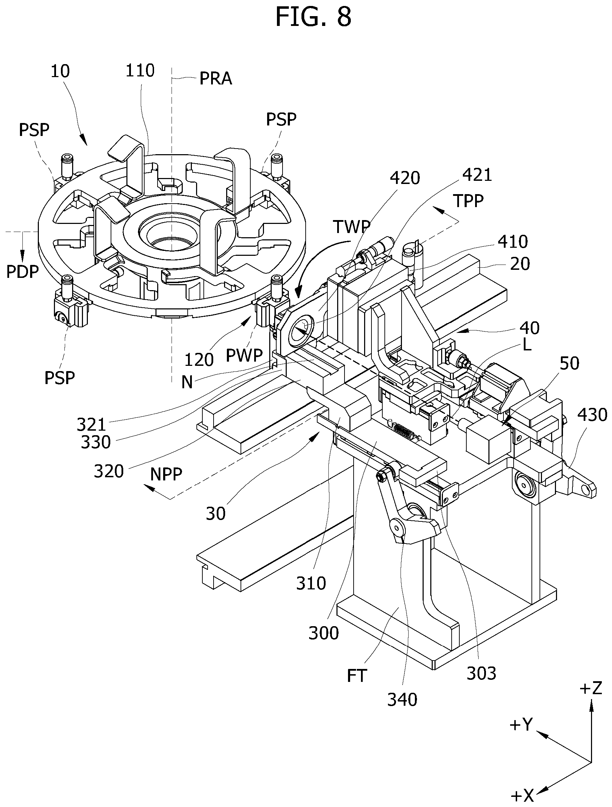

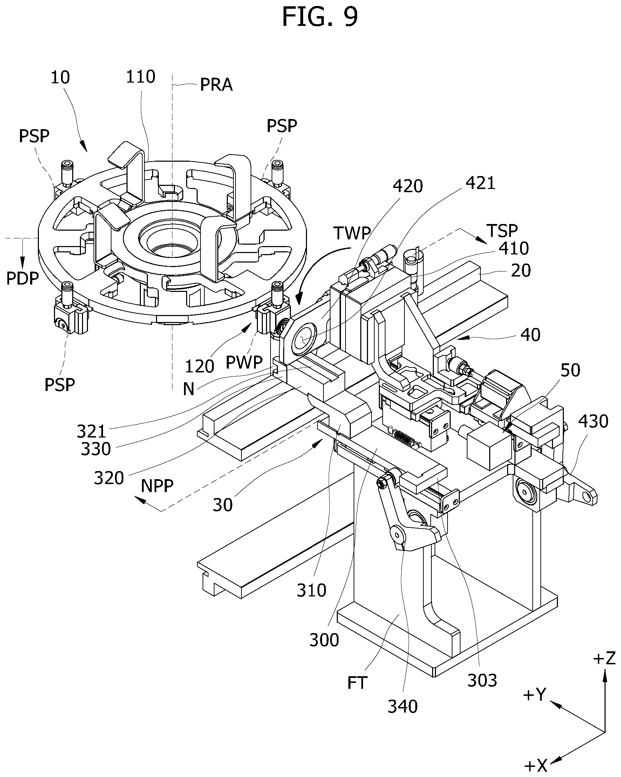

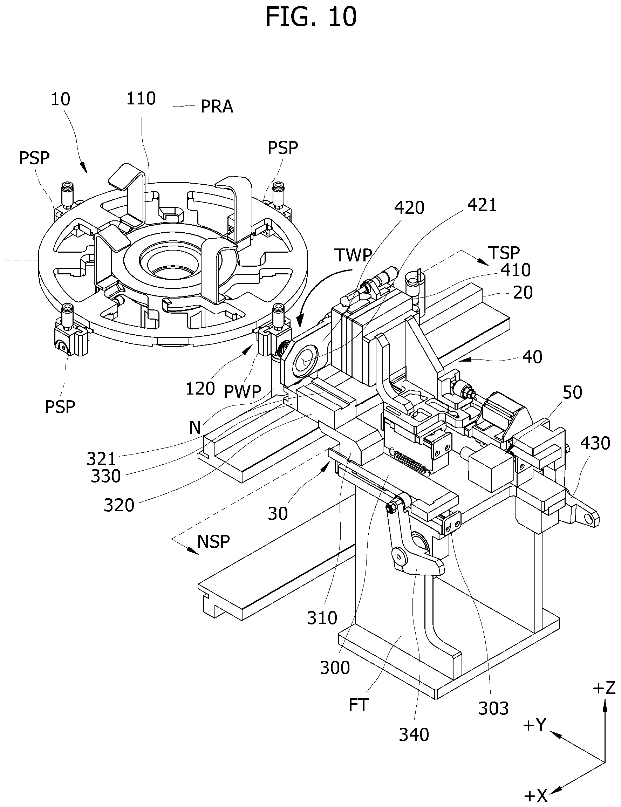

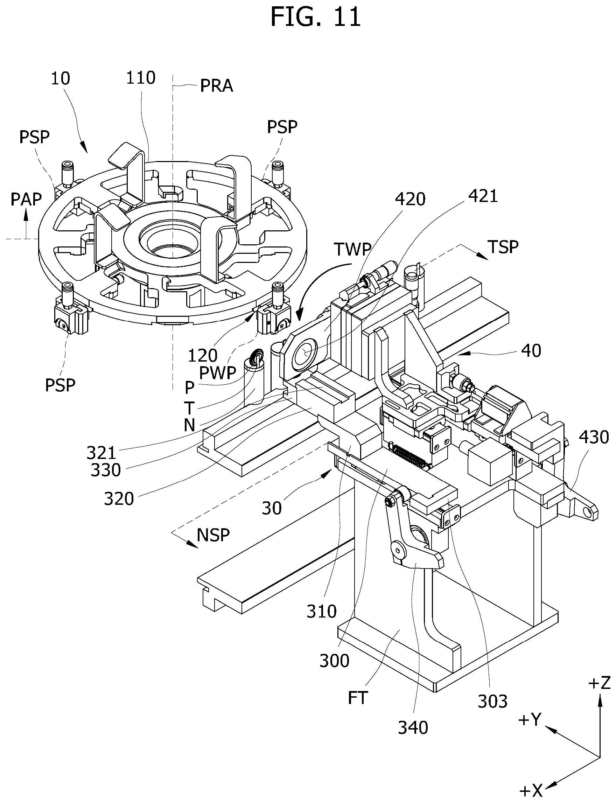

FIG. 4 is a perspective view illustrating a cap transport unit of the apparatus for manufacturing a secondary battery, which rotates, according to an embodiment of the present disclosure; FIG. 5 is a perspective view illustrating a cap transport unit of the apparatus for manufacturing a secondary battery, which descends, according to an embodiment of the present disclosure; FIG. 6 is a perspective view illustrating the tab pusher main body of the apparatus for manufacturing a secondary battery, which moves to the tab welding position, according to an embodiment of the present disclosure; FIG. 7 is a perspective view illustrating a can holder unit of the apparatus for manufacturing a secondary battery, which moves to a cap pressing position, according to an embodiment of the present disclosure; FIG. 8 is a perspective view illustrating a tab pusher unit of the apparatus for manufacturing a secondary battery, which moves to the tab pressing position, according to an embodiment of the present disclosure; FIG. 9 is a perspective view illustrating the tab pusher unit of the apparatus for manufacturing a secondary battery, which moves to a tab separation position, according to an embodiment of the present disclosure; FIG. 10 is a perspective view illustrating the can holder unit of the apparatus for manufacturing a secondary battery, which moves to a can separation position, according to an embodiment of the present disclosure; and FIG. 11 is a perspective view illustrating a can welded to a cap moved by a can transport unit of the apparatus for manufacturing a secondary battery according to an embodiment of the present disclosure.

The manufacturing apparatus 1 for a secondary battery, the cap transport unit 10, the can transport unit 20, the can holder unit 30, the tab pusher unit 40, the laser generation unit 50, the focus correction unit 60, and the fixed table FT illustrated in FIGS. 4 to 11 may be the same as the manufacturing apparatus 1 for a secondary battery, the cap transport unit 10, the can transport unit 20, the can holder unit 30, the tab pusher unit 40, the laser generation unit 50, the focus correction unit 60, and the fixed table FT illustrated in FIGS. 1 to 3. Therefore, further description of the same components may be omitted.

The cap P moved by the movement of the cap transport unit 10 will be described with reference to FIG. 4.

In FIG. 4, the tab pusher main body 420 is disposed at the focus adjusting position FAP, but is not limited thereto, and the tab pusher main body 420 may be disposed at the focus adjusting position FAP and/or the tab welding position TWP.

In FIG. 4, the can holder unit 30 is disposed at the can separation position NSP, but is not limited thereto, and, in an embodiment, the can holder unit 30 may be disposed at the can separation position NSP and/or the can pressing position NPP.

The cap P may be supplied to the cap transport unit 10, and the cap P may be disposed on the cap seating unit 120 disposed on the cap turntable 110. According to an embodiment, the cap P may be disposed on the cap seating unit 120 disposed at the cap supplying position PSP.

When the cap P is supplied to the cap transport unit 10, the cap transport unit 10 may be disposed at the cap descending position PDP. After the cap P supplied to the cap transport unit 10 is disposed at the cap seating unit 120, the cap transport unit 10 may ascend and move to the cap ascending position PAP.

The cap transport unit 10 moved to the cap ascending position PAP may rotate about the cap turntable axis PRA. According to an embodiment, the cap turntable 110 may rotate about the cap turntable axis PRA. Therefore, the cap seating unit 120 disposed at the cap supplying position PSP may move to the cap welding position PWP.

The cap seating unit 120 moved to the cap welding position PWP may be disposed adjacent to the can N. According to an embodiment, the cap P disposed on the cap seating unit 120 may be aligned with the can N.

An example in which the cap transport unit 10 moves from the cap ascending position PAP to the cap descending position PDP, the can holder unit 30 moves from the can separation position NSP to the can pressing position NPP, and the tab pusher unit 40 moves from the focus adjusting position FAP to the tab welding position TWP will be described with reference to FIGS. 5 to 7.

In FIG. 5, the tab pusher main body 420 is disposed at the focus adjusting position FAP, but is not limited thereto, and the tab pusher main body 420 may be disposed at the focus adjusting position FAP and/or the tab welding position TWP.

In FIG. 5, the can holder unit 30 is disposed at the can separation position NSP, but is not limited thereto, and, in an embodiment, the can holder unit 30 may be disposed at the can separation position NSP and/or the can pressing position NPP.

Referring to FIG. 5, when the cap seating unit 120 is disposed at the cap welding position PWP, rotation of the cap turntable 110 may be stopped. The cap turntable 110 disposed at the cap ascending position PAP may descend and move to the cap descending position PDP. Therefore, the cap P disposed at the cap seating unit 120 may overlap the tab T attached to the can N.

Referring to FIG. 6, the tab pusher main body 420 may rotate about the tab pusher main body rotational axis TPRA to move from the focus adjusting position FAP to the tab welding position TWP.

Referring to FIG. 7, the can holder unit 30 may move from the can separation position NSP to the can pressing position NPP. The can holder unit 30 may be disposed at the can separation position NSP by driving the can holder driving unit 340. When the can holder driving unit 340 is not driven, the can holder unit 30 may be moved to the can pressing position NPP by a tensile force of the can holder plate elastic member 302 that connects the fixed table protrusion FT1 to the can holder plate protrusion 301. The can holder unit 30 may move along the fixed table holder rail unit FTHR disposed on the fixed table FT.

However, an order of the movement of the cap transport unit 10 that moves from the cap ascending position PAP to the cap descending position PDP illustrated in FIG. 5, the movement of the tab pusher main body 420 that moves from the focus adjusting position FAP to the tab welding position TWP illustrated in FIG. 6, and the movement of the can holder unit 30 that moves from the can separation position NSP to the can pressing position NPP illustrated in FIG. 7 may be varied.

For example, the manufacturing apparatus 1 for a secondary battery may move in the order of FIG. 7, FIG. 6, and FIG. 5 or move in the order of FIG. 6, FIG. 7, and FIG. 5. Therefore, the operation order of the manufacturing apparatus 1 for a secondary battery is not limited to the order of FIG. 5, FIG. 6, and FIG. 7.

Referring to FIG. 8, the cap seating unit 120 on which the cap P to be welded is disposed is disposed at the cap welding position PWP, the cap transport unit 10 is disposed at the cap descending position PDP, the can holder unit 30 is disposed at the can pressing position NPP, and the tab pusher main body 420 is disposed at the tab welding position TWP.

The tab pusher unit 40 may be moved from the tab separation position TSP to the tab pressing position TPP by driving the tab pusher driving unit 430. The tab pusher guide 403 may be moved by driving the tab pusher driving unit 430, and the tab pusher holder body 410 may be moved in a direction (e.g., the +Y-axis direction) by moving the tab pusher moving plate unit 400 connected to the tab pusher guide 403. Therefore, the tab pusher main body 420 connected to the tab pusher holder body 410 may move from the tab separation position TSP to the tab pressing position TPP.

Therefore, the tab pusher contact body 424 disposed on the tab pusher main body 420 may be in contact with the tab T to press the tab T toward the cap P. In an embodiment, the tab pusher contact body 424 may include a magnet, and the cap P may be in close contact with the tab T by an attractive force generated between the tab pusher contact body 424 and the cap P and/or the tab T.

The laser L generated from the laser generation unit 50 may pass through the tab pusher main body hole 421 and may be emitted onto the tab T through the tab pusher contact body hole 4241. The laser L emitted onto the tab T may weld the tab T and the cap P.

Referring to FIG. 9, the can holder unit 30 may be moved from the can pressing position NPP to the can separation position NSP by the can holder driving unit 340, and, referring to FIG. 10, the tab pusher unit 40 may be moved from the tab pressing position TPP to the tab separation position TSP by the tab pusher driving unit 430. In an embodiment, the can holder unit 30 and the tab pusher unit 40 of the manufacturing apparatus 1 for a secondary battery may move in the order of FIGS. 9 and 10 or the order of FIGS. 10 and 9. In an embodiment, the can holder unit 30 and the tab pusher unit 40 may move concurrently (e.g., simultaneously).

Referring to FIG. 11, the cap transport unit 10 may ascend from the cap descending position PDP to the cap ascending position PAP. Therefore, the cap seating unit 120 disposed at the cap welding position PWP may be spaced apart from the welded cap P.

The can transport unit 20 may transport the welded can N. According to an embodiment, the can transport unit 20 may transport the can N with the cap P welded to the tab T in a direction (e.g., the +X-axis direction). The can transport unit 20 may stop after transporting the can N with the cap P welded to the tab T to a certain distance (e.g., a set distance).

Thereafter, the manufacturing apparatus 1 for a secondary battery may repeat the operations illustrated in FIGS. 4 to 11.

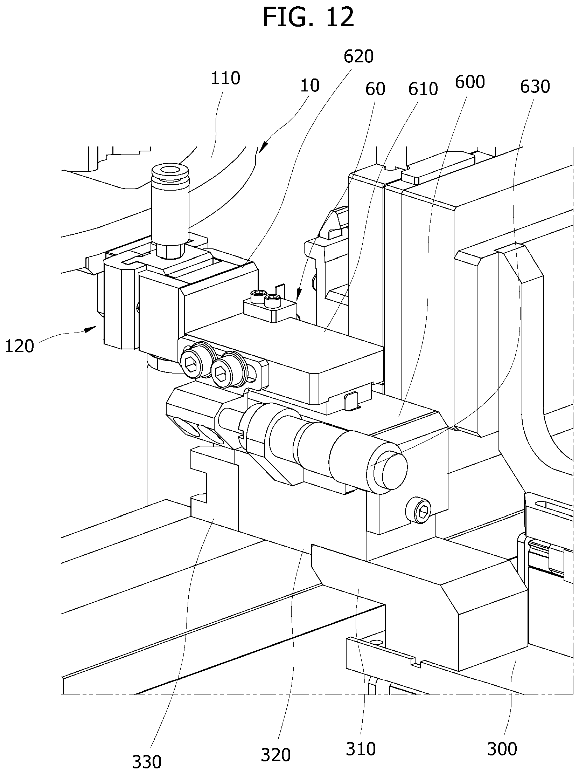

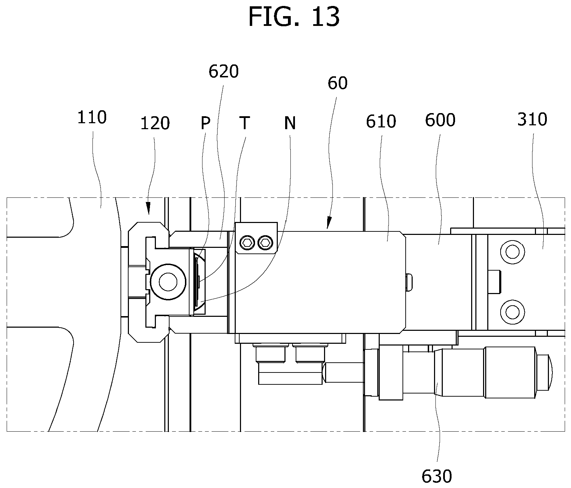

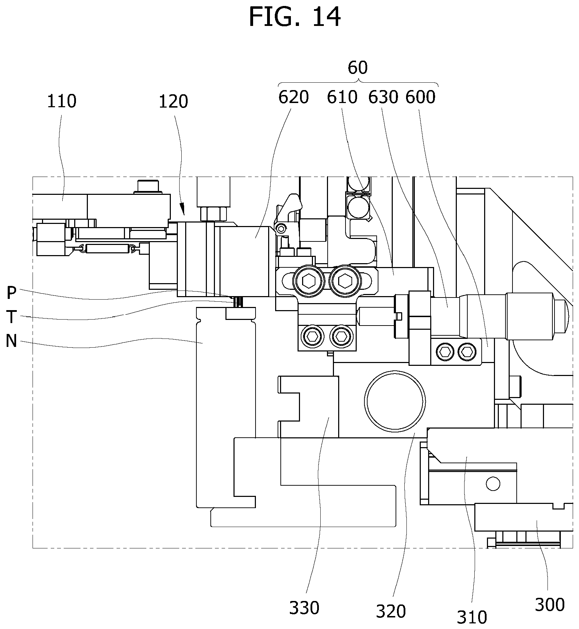

FIG. 12 is a perspective view illustrating a focus correction unit of the apparatus for manufacturing a secondary battery according to an embodiment of the present disclosure; FIG. 13 is a plan view illustrating the focus correction unit of the apparatus for manufacturing a secondary battery according to an embodiment of the present disclosure; and FIG. 14 is a side view illustrating the focus correction unit of the apparatus for manufacturing a secondary battery according to an embodiment of the present disclosure.

The focus correction unit 60 illustrated in FIGS. 12 to 14 may be the same as the focus correction unit 60 illustrated in FIGS. 1 and 2. Therefore, further description of the same component may be omitted.

Referring to FIGS. 12 to 14, the focus correction unit 60 may be disposed on the can holder unit 30. According to an embodiment, the focus correction unit 60 may be disposed on the can connection body 320. The focus correction unit 60 may be disposed in the holder groove 321 formed in the can connection body 320 and may be in contact with the cap seating unit 120. The focus correction unit 60 may correct the position of the cap seating unit 120 by being in contact with the cap seating unit 120.

In an embodiment, the focus correction unit 60 may include a focus base plate 600, a focus connection plate 610, a focus contact unit 620, and a focus adjustment actuator 630.

The focus base plate 600 may be disposed on the can connection body 320. The focus base plate 600 may be fixedly disposed on the can connection body 320.

The focus connection plate 610 may be disposed on the focus base plate 600. The focus connection plate 610 may move with respect to the focus base plate 600.

The focus contact unit 620 may be disposed to be connected to the focus connection plate 610. In an embodiment, the focus contact unit 620 may move together with the focus connection plate 610.

The focus contact unit 620 may be in contact with the cap seating unit 120. In an embodiment, when the position of the cap seating unit 120 disposed to move with respect to the cap turntable 110 is adjusted, the focus contact unit 620 may be a reference point for the movement of the cap seating unit 120.

The focus adjustment actuator 630 may connect the focus base plate 600 to the focus connection plate 610. In an embodiment, the focus adjustment actuator 630 may move in micrometer units to move the focus connection plate 610 with respect to the focus base plate 600. In an embodiment, the focus connection plate 610 and the focus contact unit 620 may move in micrometer units with respect to the focus base plate 600, and the movement of the cap seating unit 120 in contact with the focus contact unit 620 may also be adjusted in micrometer units.

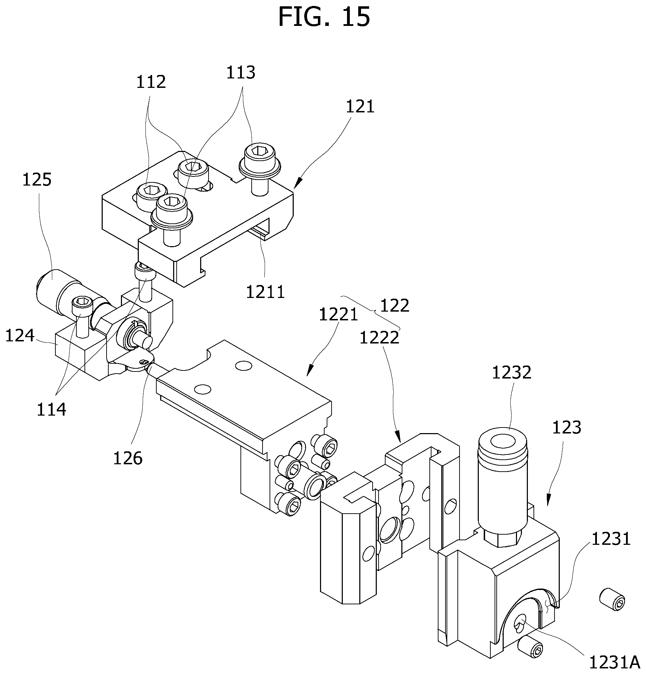

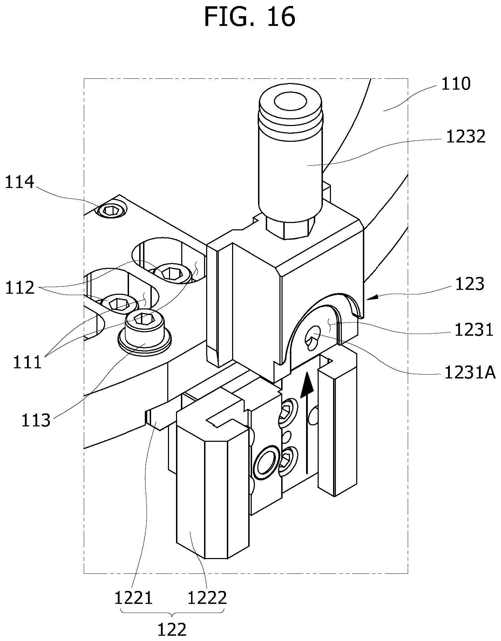

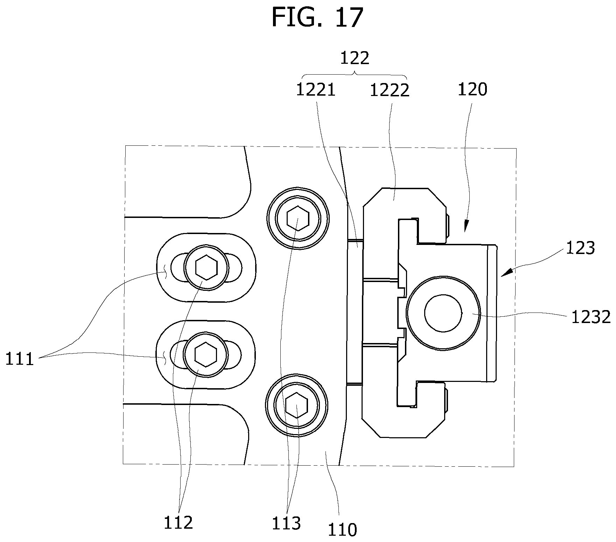

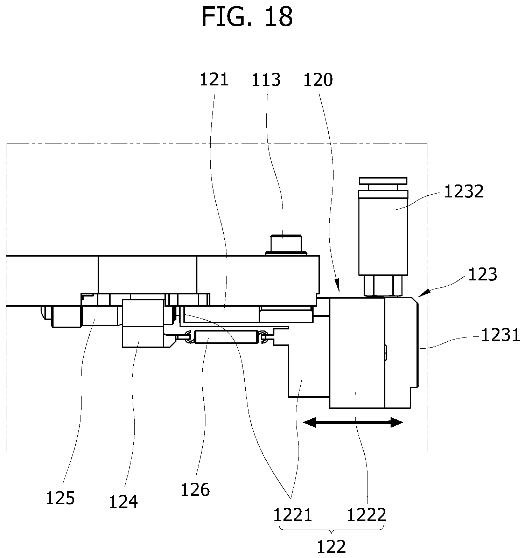

FIG. 15 is an exploded perspective view illustrating a cap seating unit of the apparatus for manufacturing a secondary battery according to an embodiment of the present disclosure; FIG. 16 is a perspective view illustrating the cap seating unit of the apparatus for manufacturing a secondary battery according to an embodiment of the present disclosure; FIG. 17 is a plan view illustrating the cap seating unit of the apparatus for manufacturing a secondary battery according to an embodiment of the present disclosure; and FIG. 18 is a side view illustrating the cap seating unit of the apparatus for manufacturing a secondary battery according to an embodiment of the present disclosure.

The cap turntable 110 and the cap seating unit 120 illustrated in FIGS. 15 to 18 may be the same as the cap turntable 110 and the cap seating unit 120 illustrated in FIGS. 1 to 14. Therefore, further description of the same components may be omitted.

Referring to FIGS. 15 to 18, the cap transport unit 10 may include a table hole 111, a focus fixing member 112, a seating mounting fixing member 113, and a microfocus fixing member 114.

The table hole 111 may be provided as a hole that passes through the cap turntable 110. The table hole 111 may pass through the cap turntable 110 in a vertical direction (e.g., the Z-axis direction). In an embodiment, the table hole 111 may be provided in a long hole shape.

The focus fixing member 112 may be inserted into the table hole 111. The focus fixing member 112 may be inserted into the table hole 111 formed as a long hole and may move in a longitudinal direction of the long hole. The focus fixing member 112 may be inserted into a seating movement unit 122 through a seating mounting unit 121. A hole formed in the seating mounting unit 121 through which the focus fixing member 112 passes may be provided as a long hole.

In an embodiment, the hole formed in the seating mounting unit 121 is provided as a long hole, and the seating movement unit 122 into which the focus fixing member 112 is inserted may move in the longitudinal direction of the long hole with respect to the seating mounting unit 121.

The seating mounting fixing member 113 may pass through the cap turntable 110 in the vertical direction (e.g., the Z-axis direction). The seating mounting fixing member 113 may be fixed to the seating mounting unit 121 through the cap turntable 110. Therefore, the seating mounting unit 121 may be fixed to the cap turntable 110.

The seating movement unit 122 may be inserted into the seating mounting unit 121 to move along a seating mounting rail 1211 of the seating mounting unit 121. According to an embodiment, the seating movement unit 122 may be inserted into the seating mounting rail 1211 such that a distance that protrudes from the seating mounting unit 121 may be adjusted.

The seating movement unit 122 may include a seating movement rail unit, or seating movement rail, 1221 and a seating replacement rail unit, or seating replacement rail, 1222. The seating movement rail unit 1221 may be fixedly connected to the seating replacement rail unit 1222.

The focus fixing member 112 may be inserted into the seating movement rail unit 1221, an insertion distance of the seating movement rail unit 1221 into the seating movement unit 122 may be adjusted, and the seating movement rail unit 1221 may be fixed to the seating movement unit 122.

A focal length replacement body 123 may be disposed on the seating replacement rail unit 1222. According to an embodiment, the focal length replacement body 123 may be disposed to be inserted into the seating replacement rail unit 1222.

The focal length replacement body 123 may include a replacement body groove 1231 in which the cap P is disposed and a replacement body vacuum connection unit, or replacement body vacuum connector, 1232. A replacement body vacuum hole 1231A that communicates with the replacement body vacuum connection unit 1232 may be formed in the replacement body groove 1231. In an embodiment, the replacement body vacuum connection unit 1232 may be connected to a driving source (not illustrated) for generating a vacuum pressure such that a negative pressure may be generated, and the negative pressure may be generated in the replacement body vacuum hole 1231A. Therefore, the cap P may be adsorbed into the focal length replacement body 123.

The focal length replacement body 123 may be coupled to and decoupled from the seating replacement rail unit 1222. In an embodiment, the focal length replacement body 123 may be replaced with another focal length replacement body 123.

The focal length support 124 may be fixed by the microfocus fixing member 114 that passes through the cap turntable 110. According to an embodiment, the microfocus fixing member 114 may be inserted into the focal length support 124 through the cap turntable 110. Therefore, the focal length support 124 may be fixed to the cap turntable 110.

A focal length fine adjustment unit 125 may be disposed on the focal length support 124. The focal length fine adjustment unit 125 may be fixed to the focal length support 124 and may be in contact with the seating movement rail unit 1221. In an embodiment, the focal length fine adjustment unit 125 may be adjusted in micrometer units to adjust a distance between the focal length support 124 and the seating movement rail unit 1221.

A focal length elastic member 126 may be disposed on the focal length support 124. An end of the focal length elastic member 126 may be connected to the focal length support 124, and another end thereof may be connected to the seating movement rail unit 1221. A tensile force may be generated in the focal length elastic member 126. Therefore, the seating movement rail unit 1221 may be in contact (e.g., close contact) with the focal length fine adjustment unit 125.

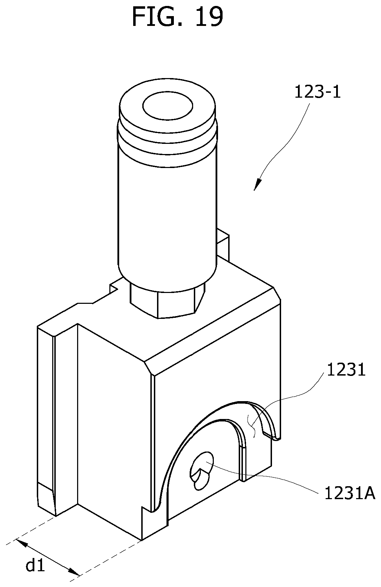

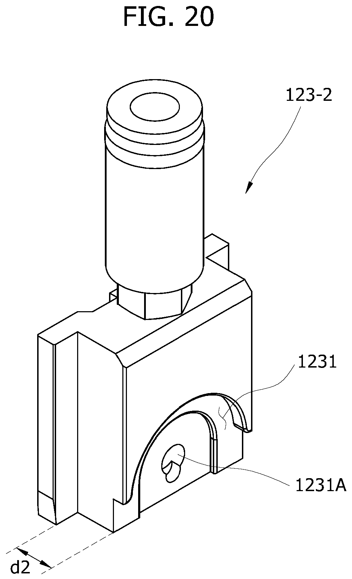

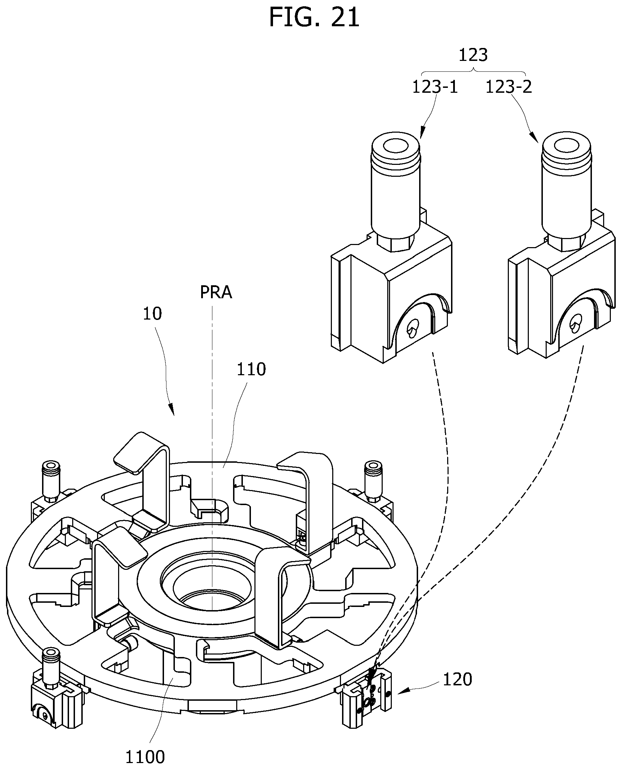

FIG. 19 is a perspective view illustrating a first focal length replacement body according to an embodiment of the present disclosure; FIG. 20 is a perspective view illustrating a second focal length replacement body according to an embodiment of the present disclosure; and FIG. 21 is a perspective view illustrating a focal length replacement body being replaced on the cap seating unit of the apparatus for manufacturing a secondary battery according to an embodiment of the present disclosure.

The focal length replacement body 123 illustrated in FIGS. 19 to 21 may be the same as the focal length replacement body 123 illustrated in FIGS. 1 to 18. Therefore, further description of the same component may be omitted.

The focal length replacement body 123 may include a first type focal length replacement body 123-1 and a second type focal length replacement body 123-2.

A thickness of the first type focal length replacement body 123-1 may be defined as a first thickness d1, and a thickness of the second type focal length replacement body 123-2 may be defined as a second thickness d2. In an embodiment, the first thickness d1 may be larger than the second thickness d2.

In an embodiment, the first thickness d1 of the first type focal length replacement body 123-1 and the second thickness d2 of the second type focal length replacement body 123-2 are formed differently, and a distance between the cap P and the laser generation unit 50 may be varied when the first type focal length replacement body 123-1 and the second type focal length replacement body 123-2 are disposed on the seating mounting unit 121.

In an embodiment, the focal length replacement body 123 may be attached to and detached from the seating movement unit 122, and the focal length replacement body 123 having an appropriate thickness may be disposed on the seating movement unit 122 according to specifications of the secondary battery being manufactured. Therefore, instead of adjusting a position of the seating movement unit 122 using a fingertip, the focal length replacement body 123 having an appropriate thickness may be selectively disposed on the seating movement unit 122. Therefore, the tab T and the cap P are not out of the focal length of the laser L, and, thus, a welding defect rate can be reduced. Further, a time required to adjust the position of the seating movement unit 122 can be reduced.

Through the apparatus for manufacturing a secondary battery according to embodiments of the present disclosure, it is possible to reduce a number of welding defects of the tab and the cap.

In addition, through the apparatus for manufacturing a secondary battery according to embodiments of the present disclosure, it is possible to reduce a defect rate of the secondary battery.

Further, through the apparatus for manufacturing a secondary battery according to embodiments of the present disclosure, it is possible to reduce a time required for manufacturing the secondary battery.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. An apparatus for manufacturing a secondary battery, the apparatus comprising:
a cap transporter comprising a cap seater, which is configured to receive a cap at a cap supplying position and on which the cap is to be seated, and is rotatable about a cap turntable axis to transport the cap to a cap welding position;
a can transporter configured to move a can connected to a tab toward the cap located at the cap welding position;
a can holder configured to move between a can separation position spaced apart from the can and a can pressing position at which the can holder comes into contact with the can and the can is pressed in a direction in which the cap transporter is arranged;
a tab pusher configured to move between a tab separation position spaced apart from the tab and a tab pressing position at which the tab pusher comes into contact with the tab and the tab is pressed toward the cap; and
a laser generator configured to emit a laser to the tab to weld the cap and the tab.

2. The apparatus as claimed in claim 1, wherein the can holder comprises:
a can holder body configured to move between the can separation position and the can pressing position;
a can concave body that comprises a concave groove to be in contact with an outer surface of the can; and
a can connection body that connects the can holder body to the can concave body and comprises a holder groove formed as a concave groove.

3. The apparatus as claimed in claim 2, wherein the can concave body of the can holder located at the can pressing position is to be in contact with the can, and
the can concave body of the can holder located at the can separation position is to be spaced apart from the can.

4. The apparatus as claimed in claim 2 or claim 3, wherein the can holder located on a fixed table comprises:
a can holder plate to which the can holder body is connected;
a can holder plate protrusion protruding from the can holder plate; and
a can holder plate elastic member connected to the can holder plate protrusion,
wherein the can holder plate elastic member is connected to a fixed table protrusion protruding from the fixed table and generates a tensile force to move the can holder to the can pressing position.

5. The apparatus as claimed in claim 4, wherein the can holder comprises a can holder driver on the fixed table to move the can holder plate to the can separation position.

6. The apparatus as claimed in any preceding claim, wherein the tab pusher comprises:
a tab pusher holder body configured to move between the tab separation position and the tab pressing position; and
a tab pusher main body that is connected to the tab pusher holder body, spaced apart from the tab at the tab separation position, and configured to press the tab toward the cap at the tab pressing position.

7. The apparatus as claimed in claim 6, wherein the tab pusher comprises a tab pusher main body hole that is a hole passing through the tab pusher main body, and
the laser is configured to be emitted onto the tab through the tab pusher main body hole of the tab pusher located at the tab pressing position.

8. The apparatus as claimed in claim 7, wherein the tab pusher main body is rotatable with respect to the tab pusher holder body and movable between a tab welding position at which the laser is configured to pass through the tab pusher main body hole and a focus adjusting position spaced apart from the tab welding position.

9. The apparatus as claimed in claim 8, wherein the tab pusher comprises:
a tab pusher holder protrusion protruding from the tab pusher holder body; and
a tab pusher main concave groove formed as a concave groove in the tab pusher main body,
wherein, based on the tab pusher main body located at the tab welding position, the tab pusher main concave groove is seated on the tab pusher holder protrusion.

10. The apparatus as claimed in claim 8 or claim 9, wherein the tab pusher further comprises a tab pusher holder latch on the tab pusher holder body, and
based on the tab pusher main body located at the tab welding position, the tab pusher holder latch is in contact with the tab pusher main body to restrict movement of the tab pusher main body.

11. The apparatus as claimed in any of claims 8 to 10, wherein the tab pusher comprises a tab pusher driver that is located on a fixed table and configured to move the tab pusher holder body between the tab separation position and the tab pressing position.

12. The apparatus as claimed in any preceding claim, wherein the cap transporter comprises a cap turntable on which the cap seater is located and which is rotatable about a cap turntable axis and vertically movable between a cap ascending position and a cap descending position.

13. The apparatus as claimed in claim 12, wherein the cap transporter comprises:
a table hole that passes through the cap turntable and is formed as a long hole; and
a focus fixing member that is inserted in the cap seater through the table hole and fixes the cap seating unit that moves with respect to the cap turntable.

14. The apparatus as claimed in claim 12 or claim 13, wherein the cap turntable is configured to receive the cap at the cap descending position, ascend from the cap descending position to the cap ascending position and rotate, and descend from the cap ascending position to the cap descending position to weld the cap and the tab by the laser.

15. The apparatus as claimed in any of claims 12 to 14, wherein the cap seater comprises a plurality of cap seaters on an outer side of the cap turntable, and the plurality of cap seaters are arranged at regular intervals.
